# EUROPEAN PATENT APPLICATION

(11) **EP 4 737 945 A1**
(43) Date of publication of application: **06.05.2026**
(21) Application number: 24832040.0
(22) Date of filing: 27.06.2024
(51) Int. Cl.: G01S 7/481, F16C 19/06, F16C 33/76, F16C 33/80, G01C 3/06, G02B 26/10

(54) **DISTANCE MEASUREMENT DEVICE**

(30) Priority: 30.06.2023 JP 2023108930; 30.06.2023 JP 2023108931; 30.06.2023 JP 2023108932; 30.06.2023 JP 2023108933; 25.09.2023 JP 2023161648; 25.09.2023 JP 2023161649; 25.09.2023 JP 2023161650; 25.09.2023 JP 2023161651; 25.09.2023 JP 2023161652
(71) Applicant: Panasonic Intellectual Property Management Co., Ltd., Kadoma-shi, Osaka 571-0057 (JP)
(72) Inventor: NISHIYAMA Akihiro, Kadoma-shi, Osaka 571-0057 (JP); KANO Yasuyuki, Kadoma-shi, Osaka 571-0057 (JP); KAMA Hirofumi, Kadoma-shi, Osaka 571-0057 (JP); ASAHI Hitoshi, Kadoma-shi, Osaka 571-0057 (JP); HARUGUCHI Takashi, Kadoma-shi, Osaka 571-0057 (JP); INOUE Masaomi, Kadoma-shi, Osaka 571-0057 (JP); MIMASA Jiro, Kadoma-shi, Osaka 571-0057 (JP); HIRUMA Takayuki, Kadoma-shi, Osaka 571-0057 (JP); YOSHINAKA Hideki, Kadoma-shi, Osaka 571-0057 (JP); KAWABUCHI Kenichiro, Kadoma-shi, Osaka 571-0057 (JP)
(74) Representative: SSM Sandmair
(86) International application number: PCT/JP2024/023338
(87) International publication number: WO 2025/005181

(57) **Abstract**

A distance measurement device for measuring a distance to an object using projection light and reflected light obtained by reflecting the projection light on the object includes a fixed portion, a rotation portion configured to rotate with respect to the fixed portion, a lipophilic lid portion configured to cover the rotation portion, and a bearing connected to the rotation portion.

## Description

### TECHNICAL FIELD

The present disclosure relates to a distance measurement device.

### BACKGROUND ART

A distance measurement device that measures a distance to an object using light is known. Patent Literature 1 discloses a distance measurement device including a mirror inclined with respect to a rotation center axis, a drive unit that rotates the mirror about the rotation center axis, and a condenser lens that is provided on the rotation center axis and that condenses reflected light reflected by the mirror onto a photodetector.

### CITATION LIST

### PATENT LITERATURE

Patent Literature 1: JP2015-148605A

### SUMMARY OF INVENTION

### TECHNICAL PROBLEM

In the distance measurement device, a bearing may be used to smoothly rotate the mirror. In the bearing, grease is used for an internal rolling element in order to reduce a frictional force. A part of the grease may volatilize and be discharged to the outside of the bearing, which may contaminate the inside of the distance measurement device.

An object of the present disclosure is to prevent grease or the like discharged from a bearing from contaminating the inside of a distance measurement device.

### SOLUTION TO PROBLEM

A distance measurement device according to the present disclosure is a distance measurement device for measuring a distance to an object using projection light and reflected light obtained by reflecting the projection light on the object, the distance measurement device including: a fixed portion; a rotation portion configured to rotate with respect to the fixed portion; a lipophilic lid portion configured to cover the rotation portion; and a bearing connected to the rotation portion.

A distance measurement device according to the present disclosure is a distance measurement device for measuring a distance to an object using projection light and reflected light obtained by reflecting the projection light on the object, the distance measurement device including: a fixed portion; a rotation portion configured to rotate with respect to the fixed portion; and a bearing connected to the rotation portion, in which the rotation portion includes a rotation fin configured to rotate together with the rotation portion and generate an airflow.

A distance measurement device according to the present disclosure is a distance measurement device for measuring a distance to an object using projection light and reflected light obtained by reflecting the projection light on the object, the distance measurement device including: a fixed portion; a rotation portion configured to rotate with respect to the fixed portion; and a bearing that includes an outer ring and an inner ring and that is connected to the rotation portion, in which a first surface of the bearing has a labyrinth structure.

### ADVANTAGEOUS EFFECTS OF INVENTION

According to the present disclosure, it is possible to prevent grease or the like discharged from a bearing from contaminating the inside of a distance measurement device.

### BRIEF DESCRIPTION OF DRAWINGS

[FIG. 1A] FIG. 1A is an external perspective view of a distance measurement device according to Embodiment 1.
[FIG. 1B] FIG. 1B is a perspective view showing a configuration of the distance measurement device with an outer cover portion and a tube cover removed according to Embodiment 1.
[FIG. 2] FIG. 2 is a longitudinal cross-sectional view of the distance measurement device according to Embodiment 1.
[FIG. 3] FIG. 3 is a perspective cross-sectional view of the distance measurement device according to Embodiment 1, in which a fixed portion and a rotation portion are disassembled.
[FIG. 4A] FIG. 4A is a view of a rotation fin according to Embodiment 1 as viewed obliquely from above.
[FIG. 4B] FIG. 4B is a view of the rotation fin according to Embodiment 1 as viewed obliquely from below.
[FIG. 5A] FIG. 5A is a view of a fixed support base according to Embodiment 1 as viewed obliquely from above.
[FIG. 5B] FIG. 5B is a view of the fixed support base according to Embodiment 1 as viewed obliquely from below.
[FIG. 6] FIG. 6 is a longitudinal cross-sectional view showing the airflow inside the distance measurement device according to Embodiment 1.
[FIG. 7A] FIG. 7A is a top view of the rotation fin, the bearing, and the fixed support base according to Embodiment 1.
[FIG. 7B] FIG. 7B is a bottom view of the rotation fin, the bearing, and the fixed support base according to Embodiment 1.
[FIG. 8A] FIG. 8A is a longitudinal cross-sectional view showing a configuration example of the bearing according to Embodiment 1.
[FIG. 8B] FIG. 8B is a longitudinal cross-sectional view showing a modification of the bearing according to Embodiment 1.
[FIG. 9] FIG. 9 is a perspective view showing a configuration of the distance measurement device with the outer cover portion and a top surface lid removed according to Embodiment 1.
[FIG. 10A] FIG. 10A is a view of a lens cover according to Embodiment 1 as viewed obliquely from above.
[FIG. 10B] FIG. 10B is a view of the lens cover according to Embodiment 1 as viewed obliquely from below.
[FIGS. 11A and 11B] FIG. 11A is a diagram showing refraction of light when grease adheres to an oil repellent member and FIG. 11B is a diagram showing refraction of light when grease adheres to a lipophilic member.
[FIG. 12] FIG. 12 is a graph showing a relationship between a contact angle of grease on a reflecting mirror and a signal reduction level according to Embodiment 1.
[FIG. 13] FIG. 13 is a graph showing a relationship between a contact angle of grease on the outer cover portion and the signal reduction level according to Embodiment 1.

### DESCRIPTION OF EMBODIMENTS

Hereinafter, embodiments of the present disclosure will be described in detail with reference to the drawings as appropriate. However, the unnecessarily detailed description may be omitted. For example, the detailed description of already well-known matters and the redundant description of substantially the same configuration may be omitted. This is to avoid unnecessary redundancy of the following description and to facilitate understanding of those skilled in the art. The accompanying drawings and the following description are provided for those skilled in the art to sufficiently understand the present disclosure, and are not intended to limit the subject matter described in claims.

### (Embodiment 1)

### <Configuration of Device>

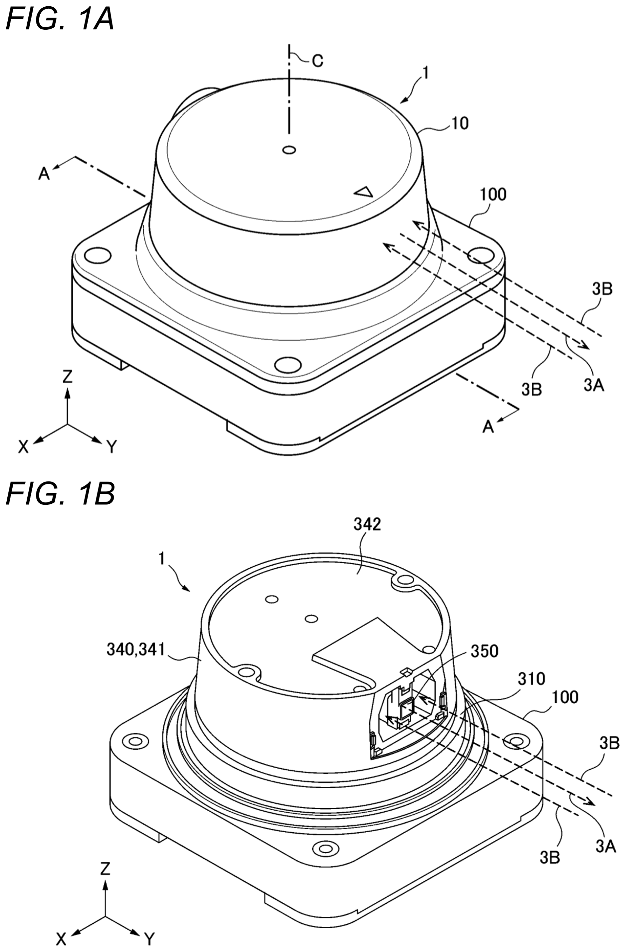

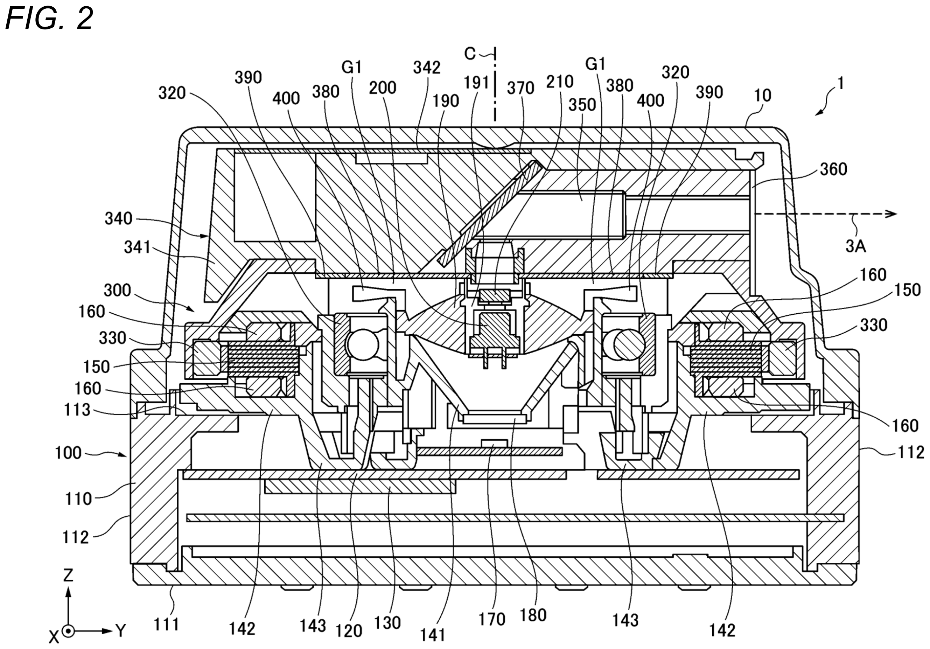

FIG. 1A is an external perspective view of a distance measurement device 1 according to Embodiment 1. FIG. 1B is a perspective view showing a configuration of the distance measurement device 1 with an outer cover portion and a tube cover removed according to Embodiment 1. FIG. 2 is a longitudinal cross-sectional view of the distance measurement device 1 according to Embodiment 1. FIG. 2 corresponds to a cross-sectional view of the distance measurement device 1 shown in FIG. 1A taken along a line A-A.

As shown in FIGS. 1A and 2, the distance measurement device 1 includes a fixed portion 100, a rotation portion 300, and an outer cover portion 10. The fixed portion 100 has a substantially rectangular parallelepiped shape and includes a bottom surface portion 111 and an upper surface portion 113 along the bottom surface portion 111. The rotation portion 300 is connected to the upper surface portion 113 of the fixed portion 100 and has a cylindrical shape that rotates about an axis perpendicular to the upper surface portion 113 as a rotation axis C. The outer cover portion 10 has a cylindrical shape and covers the rotation portion 300 from above. At least a part of the side surface of the outer cover portion 10 is implemented using a wavelength selection member. Here, the wavelength selection member is a material that transmits light of a predetermined wavelength (frequency) component used for distance measurement and that blocks light of a wavelength (frequency) component in the visible region. The wavelength selection member has a function of blocking ambient light such as natural light or electric light.

For convenience of description, as shown in FIG. 1A, an axis perpendicular to the bottom surface portion 111 (or the upper surface portion 113) of the fixed portion 100 is defined as a Z axis. An axis perpendicular to the Z axis is defined as an X axis. An axis perpendicular to the Z axis and the X axis is defined as a Y axis. For convenience of description, the positive direction of the Z axis may be referred to as "upper", the negative direction of the Z axis may be referred to as "lower", and a direction away from the Z axis in an X axis direction or a Y axis direction may be referred to as "lateral". Expressions related to these directions are used for convenience of description, and are not intended to limit a posture of the structure in actual use. For example, the distance measurement device 1 shown in FIG. 1A may be used upside down.

The bottom surface portion 111 of the fixed portion 100 may be fixedly provided on a predetermined plane (for example, a floor surface or a housing surface of a predetermined device).

The rotation portion 300 rotates about a center axis in the height direction (the Z axis) of the cylinder as the rotation axis C. With the rotation of the rotation portion 300, the optical axis of light (hereinafter referred to as projection light 3A) projected from a part of the side surface of the rotation portion 300 in the lateral direction rotates about the rotation axis C. Along with this, the projection light 3A and a region (hereinafter, referred to as a distance measurement region) in which distance measurement can be performed with the projection light 3A also rotate. As will be described later, the distance measurement device 1 measures the distance to the object present in the distance measurement region based on a time difference (Time of Flight (ToF)) between a timing at which the projection light 3A is projected and a timing at which the projection light 3A is received as light (hereinafter referred to as reflected light 3B) reflected by the object in the distance measurement region. The rotation portion 300 makes one round around the rotation axis C, so that the distance measurement device 1 can measure the distance to the object present in the distance measurement region of 360 degrees around the lateral direction.

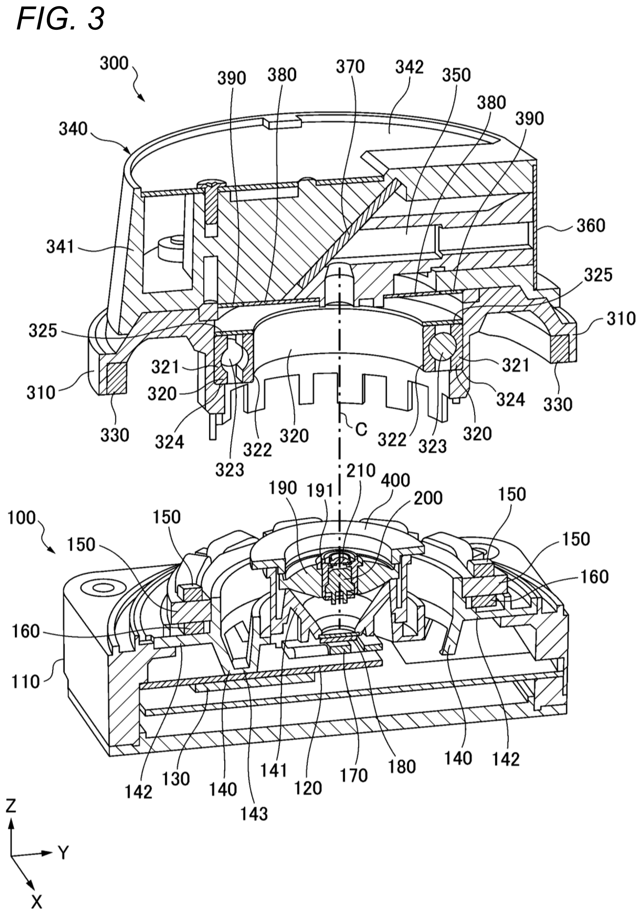

FIG. 3 is a perspective cross-sectional view of the distance measurement device 1 according to Embodiment 1, in which the fixed portion 100 and the rotation portion 300 are disassembled and cut in the same manner as in FIG. 2. In FIG. 3, a part of components (the outer cover portion 10 and the like) provided in the distance measurement device 1 are not shown in order to make the drawing easy to see. Next, configurations of the fixed portion 100 and the rotation portion 300 of the distance measurement device 1 will be described in detail with reference to FIGS. 2 and 3.

### <Configuration of Fixed Portion>

The fixed portion 100 includes a housing portion 110, a board 120, a control unit 130, a fixed support base 140, a yoke 150, a coil 160, a photodetector 170, a bandpass filter 180, a detection lens 190, a light source 200, a collimator lens 210, and a lens cover 400.

The housing portion 110 has a substantially rectangular parallelepiped shape and includes the bottom surface portion 111 constituting the bottom surface of the housing portion 110, a side surface portion 112 constituting the side surface of the housing portion 110, and the upper surface portion 113 constituting the upper surface of the housing portion 110. The upper surface portion 113 has a circular opening. The housing portion 110 is made of, for example, metal such as aluminum die casting.

The board 120 is, for example, a printed circuit board (PCB), and is provided along the bottom surface portion 111 (for example, parallel to the bottom surface portion 111) in the housing portion 110. The board 120 includes an electronic circuit, an electronic component, and the like for controlling the operation of the distance measurement device 1.

The control unit 130 is provided on, for example, the lower surface side of the board 120. The control unit 130 executes processing for controlling the operation of the distance measurement device 1. Examples of the control unit 130 include a central processing unit (CPU), a field programmable gate array (FPGA), an application specific IC (ASIC), and a large scale integration (LSI). The control unit 130 may include a storage unit (not shown) for storing data and/or a program.

The fixed support base 140 includes an inverted conical portion 141, a base annular portion 142, and an annular recess 143. The inverted conical portion 141 has a substantially inverted conical shape (that is, a funnel shape) that is formed near the center and that has an inner diameter decreasing from the top to the bottom. The base annular portion 142 surrounds the inverted conical portion 141 and extends in an annular shape in the lateral direction. The annular recess 143 connects the base annular portion 142 and the inverted conical portion 141 and has an annular recessed shape. The upper side and the lower side of the inverted conical portion 141 are open. The fixed support base 140 is made of, for example, resin.

The fixed support base 140 is provided above the board 120 such that the inverted conical portion 141 and the annular recess 143 are fitted into the opening of the upper surface portion 113 of the housing portion 110, and a part of the base annular portion 142 is supported from below on a part of the upper surface portion 113 of the housing portion 110. The detailed configuration of the fixed support base 140 will be described later.

The yoke 150 and the coil 160 wound around the yoke 150 constitute an electromagnet, and generate a magnetic force when a current flows through the coil 160. Hereinafter, the yoke 150 and the coil 160 may be collectively referred to as an electromagnet. The plurality of electromagnets are fixedly arranged in an annular shape on the base annular portion 142 of the fixed support base 140.

The photodetector 170 is a device that detects the amount of received light, and is implemented using, for example, a photodiode. The photodetector 170 is provided below the lower opening of the inverted conical portion 141 of the fixed support base 140.

The bandpass filter 180 closes the lower opening of the inverted conical portion 141 of the fixed support base 140. The bandpass filter 180 is a filter that transmits light of a predetermined wavelength (frequency) component and that blocks light of other wavelength (frequency) components.

The detection lens 190 is provided in the upper opening of the inverted conical portion 141 of the fixed support base 140. The detection lens 190 is a convex lens having a through hole 191 along the rotation axis C. The detection lens 190 may be read as a condenser lens.

The light source 200 is embedded in the through hole 191 of the detection lens 190 and projects the projection light 3A having a predetermined wavelength upward. The projection light 3A of the light source 200 is, for example, pulsed laser light.

The collimator lens 210 is provided above the light source 200. The collimator lens 210 corrects the projection light 3A received from the light source 200 to parallel light and outputs the parallel light upward.

The lens cover 400 has an annular shape whose center is opened in a circular shape. The lens cover 400 is supported on the fixed support base 140 such that the central circular opening corresponds to the opening above the inverted conical portion 141 of the fixed support base 140. The lens cover 400 is made of, for example, resin. The details of the lens cover 400 will be described later.

### <Configuration of Rotation Portion>

The rotation portion 300 includes a rotation fin 310, a bearing 320, a magnet 330, a cylinder portion 340, a tube portion 350, a tube cover 360, a reflecting mirror 370, a sheet 380, and an oil adsorption filter 390.

The rotation fin 310 has an annular shape whose center is opened in a circular shape. The rotation fin 310 is provided such that the inverted conical portion 141 of the fixed support base 140 is provided in the opening and the portion having the annular shape covers the base annular portion 142 of the fixed support base 140 from above. The rotation fin 310 is made of, for example, resin. The details of the rotation fin 310 will be described later.

As shown in FIG. 3, the bearing 320 includes an annular outer ring 321 and an annular inner ring 322, and a plurality of rolling elements 323 such as balls or rollers between the outer ring 321 and the inner ring 322. Accordingly, the outer ring 321 can smoothly rotate with respect to the inner ring 322. The bearing 320 is provided inside the opening of the rotation fin 310, the outer ring 321 is connected to the rotation fin 310, and the inner ring 322 is connected to the fixed support base 140. The details of the bearing 320 will be described later.

The magnet 330 is annularly provided in the vicinity of the outer peripheral portion of the rotation fin 310. The magnets 330 are arranged such that adjacent magnets have different polarities. The magnet 330 is at a position facing the yoke 150 and the coil 160 (that is, the electromagnet) in the lateral direction when the rotation fin 310 is provided.

The cylinder portion 340 has a cylindrical shape, and the bottom surface thereof is connected (fixed) to the upper surface of the rotation fin 310. Alternatively, the cylinder portion 340 and the rotation fin 310 may be integrated. The cylinder portion 340 is made of, for example, resin. The details of the cylinder portion 340 will be described later.

The tube portion 350 is a cylindrical space formed from the rotation axis C of the cylinder portion 340 to the side surface of the cylinder portion 340 inside the cylinder portion 340 in order to separate the outward light from the return light. The tube portion 350 prevents light (which is generally transmitted but has a small amount of reflected light) that hits the tube cover 360 and/or the outer cover portion 10 to be described later from being reflected and entering the photodetector 170 via the reflecting mirror 370.

The tube cover 360 is a plate through which at least light of a predetermined wavelength (frequency) component used for distance measurement is transmitted, and is provided such that the tube portion 350 closes an opening formed in the side surface of the cylinder portion 340.

The reflecting mirror 370 is a mirror capable of reflecting light, and is provided inside the cylinder portion 340 at a position where the rotation axis C of the cylinder portion 340 and the tube portion 350 intersect. The reflecting mirror 370 is provided at an angle (for example, 45 degrees) at which the light emitted upward by the light source 200 is reflected in the axial direction (that is, the lateral direction) of the tube portion 350.

The sheet 380 is an annular planar sheet whose center is opened in a circular shape, and is provided between the bottom surface of the cylinder portion 340 and the bearing 320 and/or the lens cover 400. The sheet 380 transmits, for example, light of a predetermined wavelength (frequency) component such as reflected light.

The oil adsorption filter 390 is an annular planar filter whose center is opened in a circular shape, and is provided between the bottom surface of the cylinder portion 340 and the rotation fin 310. The oil adsorption filter 390 may be provided closer to the bearing 320 than is the sheet 380. Alternatively, the oil adsorption filter 390 may be provided between the bottom surface of the cylinder portion 340 and the bearing 320 and/or the lens cover 400. The oil adsorption filter 390 is a filter (for example, a sponge filter) having a function of adsorbing oil.

### <Behavior of Optical System>

The distance measurement device 1 projects the projection light 3A, receives the reflected light 3B, and measures the distance to the object as follows.

(S11) The light source 200 projects the projection light 3A (for example, a light pulse laser) upward.

(S12) The projection light 3A emitted from the light source 200 is converted into substantially parallel light by the collimator lens 210, and is reflected by the reflecting mirror 370 in the axial direction (the lateral direction) of the tube portion 350. Here, the term "substantially parallel" as used herein includes a range in which the projection light 3A is parallel to the extent that the distance measurement can be performed.

(S13) The projection light 3A reflected by the reflecting mirror 370 passes through the tube portion 350, passes through the tube cover 360 and the outer cover portion 10, and travels to the distance measurement region.

(S14) The projection light 3A is reflected by the object in the distance measurement region (that is, becomes the reflected light 3B).

(S15) As shown in FIG. 1B, at least a part of the reflected light 3B is input to the spaces on both sides of the tube portion 350.

(S16) The reflected light 3B input to the spaces on both sides of the tube portion 350 is reflected downward by the reflecting mirror 370.

(S17) The reflected light 3B reflected downward by the reflecting mirror 370 is refracted so as to be condensed at the position of the photodetector 170 located below when passing through the detection lens 190, and passes through the bandpass filter 180. The bandpass filter 180 passes light of a predetermined wavelength (frequency) component.

(S18) The light amount of the reflected light 3B that has passed through the bandpass filter 180 is detected by the photodetector 170.

Accordingly, when the object is present, the photodetector 170 can detect the reflected light 3B having a predetermined light amount or more. Therefore, the control unit 130 may determine that an object is present when the light amount detected by the photodetector 170 is equal to or greater than a predetermined threshold value, and may determine that no object is present when the light amount is less than the predetermined threshold value.

The control unit 130 may measure (calculate) the distance to the object based on the time (that is, ToF) until the irradiation light (the light pulse) emitted by the light source 200 is detected as the reflected light 3B (the light pulse) by the photodetector 170.

Accordingly, the distance measurement device 1 can determine the presence or absence of an object and measure the distance to the object.

### <Operation of Rotation Portion>

The distance measurement device 1 rotates the rotation portion 300 as follows.

By passing a current through the coil 160, the coil 160 and the yoke 150 generate a magnetic field as an electromagnet, and the coil 160 and the yoke 150 move the magnets 330 facing each other in the rotation direction around the rotation axis C.

Accordingly, the rotation fin 310 to which the magnet 330 is connected, the cylinder portion 340 connected to the upper surface of the rotation fin 310, and the like (that is, the entire rotation portion 300) rotate about the rotation axis C. At this time, the rotation fin 310 rotates smoothly because the rotation fin 310 is connected to the outer ring 321 of the bearing 320.

As the rotation portion 300 rotates, the reflecting mirror 370 and the tube portion 350 that are present inside the cylinder portion 340 also rotate about the rotation axis C. Therefore, the projection light 3A emitted from the tube portion 350 to the outside also rotates about the rotation axis C. That is, the projection light 3A is projected over the entire circumference (360 degrees) in the lateral direction around the rotation axis C. Accordingly, the control unit 130 of the distance measurement device 1 can determine the presence or absence of the object, measure the direction in which the object is present, and measure the distance to the object over substantially the entire circumference in the lateral direction. The rotation portion 300 may not necessarily rotate by 360 degrees as the control of the distance measurement, and may rotate in a rotation range as a target of the distance measurement. Accordingly, the life of the light source 200 can be extended.

### <Problem when Bearing is Provided>

As shown in FIG. 3, the bearing 320 includes, in addition to the outer ring 321, the inner ring 322, and the rolling elements 323, a lower surface portion 324 extending from the outer ring 321 toward the inner ring 322 and having a gap with the inner ring 322 on the lower side, and an upper surface portion 325 extending from the outer ring 321 toward the inner ring 322 and having a gap with the inner ring 322 on the upper side.

A lubricant is used inside the bearing 320 in order to reduce friction between the outer ring 321 and the inner ring 322, and the rolling elements 323. Examples of the lubricant include oil and grease. The lubricant (oil or grease) contains a base oil as a constituent substance. Hereinafter, a specific example of the lubricant is expressed as grease. A part of the grease is volatilized and discharged to the outside of the bearing 320 from the gap between the upper surface portion 325 and the inner ring 322. When the grease discharged from the bearing 320 and a foreign substance or the like (hereinafter, referred to as grease or the like) adhering to the grease adhere to, for example, an optical member including at least one of the light source 200, the collimator lens 210, the detection lens 190, the reflecting mirror 370, and the photodetector 170, or a light transmitting member including at least one of the tube cover 360 and the outer cover portion 10, the detection accuracy and the distance measurement accuracy of the object decrease.

Therefore, in the present embodiment, the distance measurement device 1 will be described that has countermeasures for preventing the grease or the like discharged from the bearing 320 from adhering to the optical member and the light transmitting member such as the tube cover 360 and the outer cover portion 10 provided on the optical path of the projection light and the reflected light. The components listed above are merely examples, and there is no intention to limit an adhesion target such as grease. The following countermeasures may be applied alone, two or more of the countermeasures may be applied in combination, or all of the countermeasures may be applied.

### <Countermeasure 1>

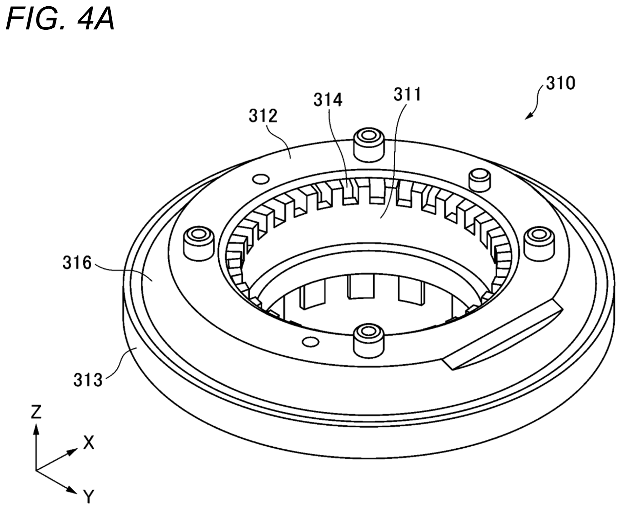

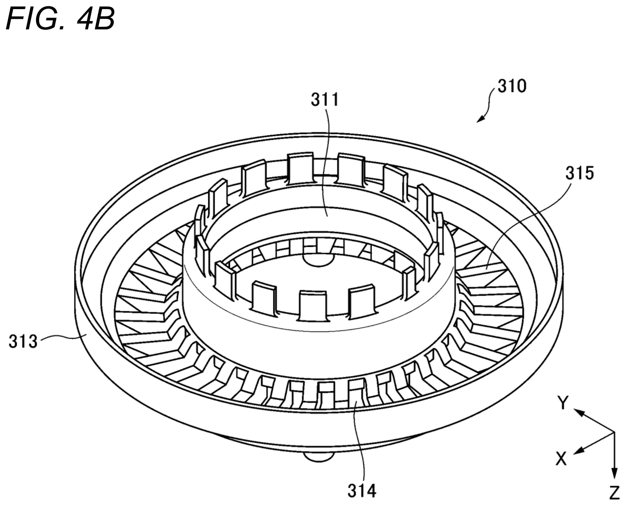

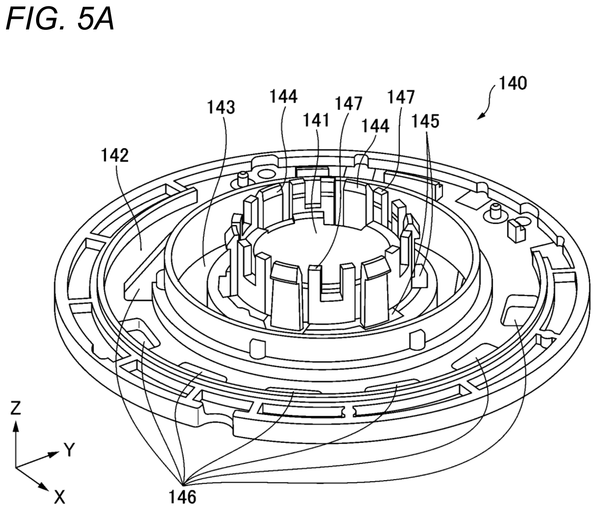

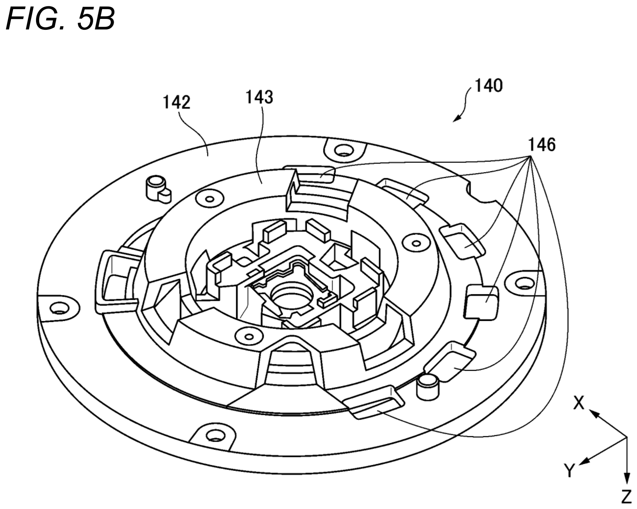

FIG. 4A is a view of the rotation fin 310 according to Embodiment 1 as viewed obliquely from above. FIG. 4B is a view of the rotation fin 310 according to Embodiment 1 as viewed obliquely from below. FIG. 5A is a view of the fixed support base 140 according to Embodiment 1 as viewed obliquely from above. FIG. 5B is a view of the fixed support base 140 according to Embodiment 1 as viewed obliquely from below.

First, detailed configurations of the rotation fin 310 and the fixed support base 140 will be described.

As shown in FIGS. 4A and 4B, the rotation fin 310 has an annular shape whose center is opened in a circular shape, and includes an inner surface portion 311 forming the side surface of the opening, an upper surface portion 312 forming an annular upper surface, and an outer surface portion 313 forming the side surface of the outer periphery of the annular ring.

In the rotation fin 310, a plurality of first holes 314 are formed in a circular shape along the opening at the boundary portion between the inner surface portion 311 and the upper surface portion 312. In addition, in the rotation fin 310, a plurality of fins 315 are formed at the boundary portion between the inner surface portion 311 and the upper surface portion 312 on the back surface (that is, the surface of the upper surface portion 312 close to the fixed portion 100) (see FIG. 4B).

The upper surface portion 312 may have an inclined surface 316 approaching the outer surface portion 313 at a boundary portion with the outer surface portion 313.

The magnet 330 is provided inside the outer surface portion 313 of the rotation fin 310. The magnet 330 faces the yoke 150 and the coil 160 in the lateral direction.

As shown in FIGS. 5A and 5B, the fixed support base 140 includes the inverted conical portion 141, the base annular portion 142, and the annular recess 143 as described above. In addition, the fixed support base 140 includes a plurality of locking portions 144 that extend upward from the outer surface of the inverted conical portion 141 and that lock the inner ring 322 of the bearing 320, a second hole 145 formed in the lower portion of each locking portion 144, one or a plurality of third holes 146 formed in the base annular portion 142, and a plurality of support portions 147 that extend upward from the outer surface of the inverted conical portion 141 and that support the lens cover 400. The third hole 146 is formed at a position overlapping the coil 160 and the yoke 150 when viewed in the direction of the rotation axis C (that is, when viewed from above).

Next, the airflow generated by the rotation of the rotation fin 310 will be described.

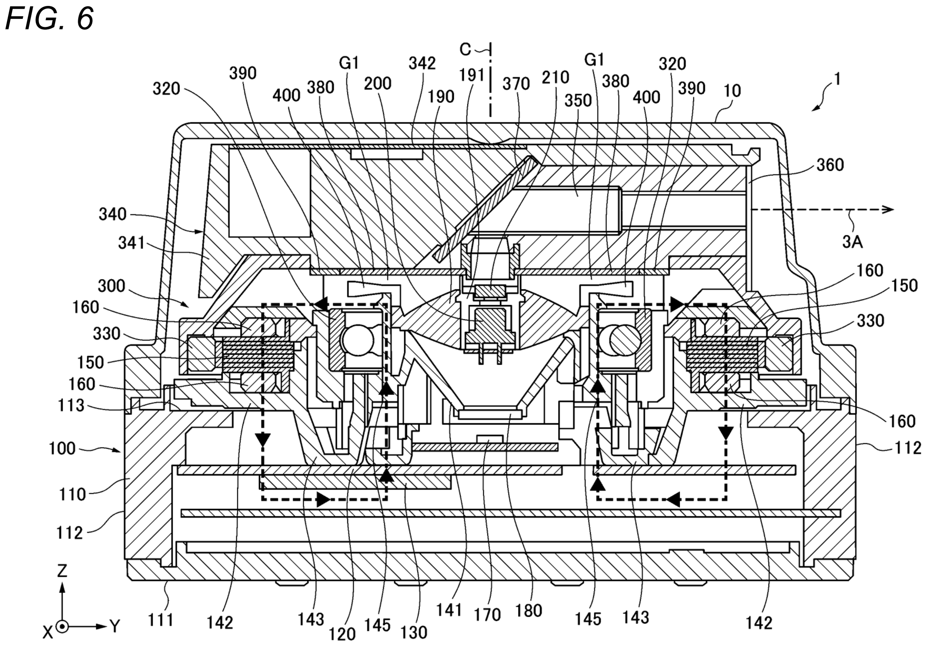

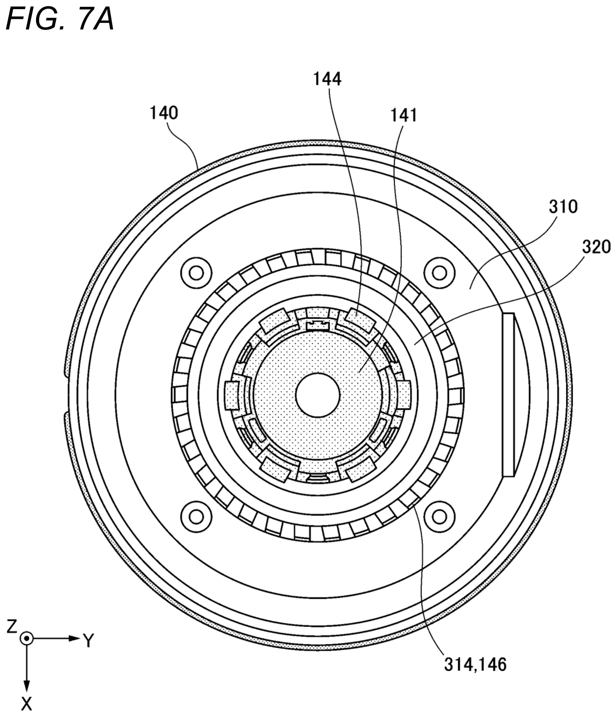

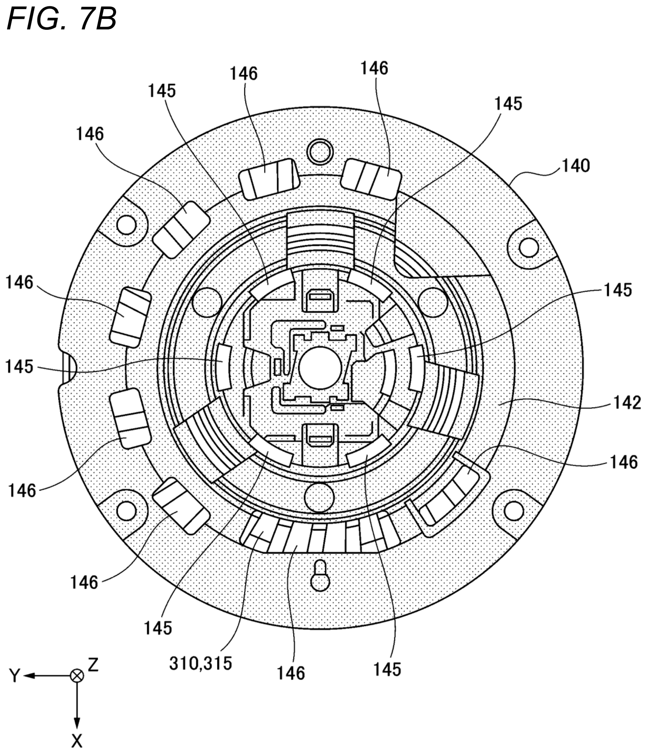

FIG. 6 is a longitudinal cross-sectional view showing the airflow inside the distance measurement device 1 according to Embodiment 1. In FIG. 6, the airflow is indicated by a dotted arrow. The cross section shown in FIG. 6 is the same as the cross section shown in FIG. 2. FIG. 7A is a top view of the rotation fin 310, the bearing 320, and the fixed support base 140 according to Embodiment 1. FIG. 7B is a bottom view of the rotation fin 310, the bearing 320, and the fixed support base according to Embodiment 1. The rotation of the cylinder portion 340 including the rotation fin 310 generates the following airflow.

(S21) When the rotation fin 310 rotates, an airflow that enters from the gap at the upper end of the locking portion 144, that advances along the upper surface portion 325 of the bearing 320 in the outer peripheral direction, and that exits from the first hole 314 of the rotation fin 310 is generated.

(S22) The airflow coming out from the first hole 314 of the rotation fin 310 advances along the lower surface of the upper surface portion 312 of the rotation fin 310 in the outer peripheral direction, and is directed downward along the inclined surface 316.

(S23) The downward airflow passes through the position where the yoke 150 and the coil 160 are provided, passes through the third hole 146 of the base annular portion 142 of the fixed support base 140, and is directed downward.

(S24) The downward airflow flows along the lower surface of the board 120 and enters the second hole 145 of the fixed support base 140 again.

(S25) The airflow entering from the second hole 145 of the fixed support base 140 passes through the gap between the inner ring 322 of the bearing 320 and the locking portion 144, and is directed upward.

In this way, when the rotation fin 310 is rotated, an airflow flowing from the inner ring 322 side to the outer ring 321 side along the upper surface portion 325 of the bearing 320 is generated. Accordingly, the grease or the like discharged from the gap of the upper surface portion 325 of the bearing 320 is carried in a direction away from the rotation axis C by the airflow. Therefore, the grease or the like discharged from the gap of the upper surface portion 325 of the bearing 320 is less likely to reach the optical member provided near the rotation axis C, and as a result, the grease or the like can be prevented from adhering to the optical member.

Since the airflow passes through the position where the yoke 150 and the coil 160 are provided, the airflow also serves to cool the yoke 150 and the coil 160.

Even when the rotation fin 310 is not provided, a downward airflow is generated by the rotation of the rotation portion 300. The airflow can be directed downward through the second hole 145 of the fixed support base 140 with the grease or the like discharged from the bearing 320 placed thereon. That is, by forming the second hole 145 in the fixed support base 140, the airflow mixed with grease or the like discharged from the bearing 320 can be released downward away from the optical member.

### <Countermeasure 2>

As shown in FIG. 2, the sheet 380 is an annular sheet provided between the bottom surface of the cylinder portion 340 and the upper surface portion 325 of the bearing 320 and the upper surface of the lens cover 400 so as to cover the circular opening at the center of the rotation fin 310 except for the portion of the rotation axis C at the center. A gap G1 is formed between the sheet 380 and the upper surface of the lens cover 400.

Accordingly, as shown in FIG. 6, the airflow generated below the sheet 380 is blocked by the sheet 380 and does not flow toward the cylinder portion 340. Therefore, it is possible to prevent the grease or the like discharged from the gap of the upper surface portion 325 of the bearing 320 from being carried by the airflow, moving toward the cylinder portion 340, and adhering to the optical member.

As shown in FIG. 2, the oil adsorption filter 390 is an annular filter (for example, a sponge sheet) provided between the bottom surface of the cylinder portion 340 and the upper surface portion 325 of the bearing 320 and the upper surface of the lens cover 400 so as to cover the first hole 314 of the rotation fin 310. The oil adsorption filter 390 may be provided closer to the upper surface portion 325 of the bearing 320 than is the sheet 380. The oil adsorption filter 390 may be provided such that the inner periphery of the oil adsorption filter 390 extends along the outer periphery of the sheet 380. Alternatively, the oil adsorption filter 390 may be provided such that at least a part of the oil adsorption filter 390 overlaps at least a part of the sheet 380 when viewed from above.

Accordingly, at least a part of the grease or the like contained in the airflow traveling along the upper surface portion 325 of the bearing 320 in the outer peripheral direction and then traveling toward the rotation axis C through the gap G1 is adsorbed by the oil adsorption filter 390. Therefore, the amount of the grease or the like carried by the airflow can be reduced, and as a result, the grease or the like can be prevented from adhering to the optical member.

### <Countermeasure 3>

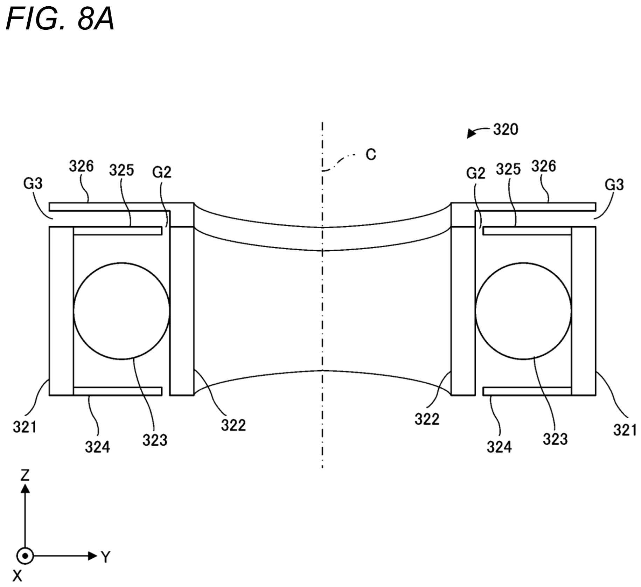

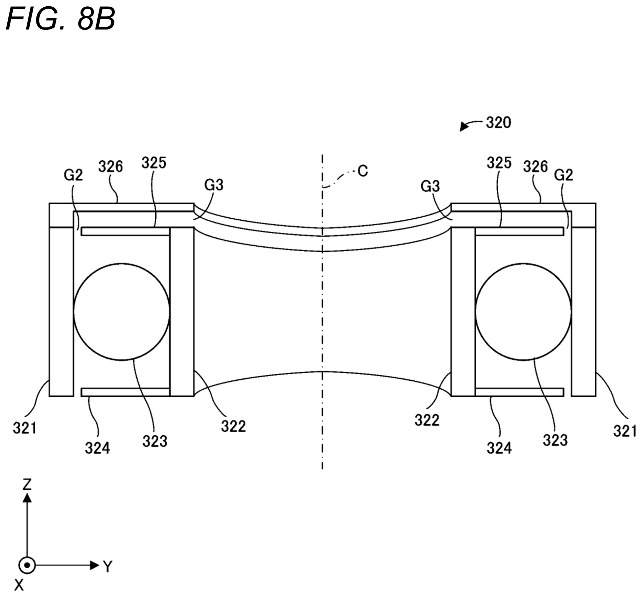

FIG. 8A is a longitudinal cross-sectional view showing a configuration example of the bearing 320 according to Embodiment 1. FIG. 8B is a longitudinal cross-sectional view showing a modification of the bearing 320 according to Embodiment 1. The longitudinal cross sections shown in FIGS. 8A and 8B correspond to the A-A longitudinal cross section in FIG. 1A.

As shown in FIG. 8A or 8B, on the upper surface portion 325 of the bearing 320, an annular upper plate portion 326 that has a gap from the upper surface portion 325 in the height direction and that covers the upper surface portion 325 of the bearing 320 may be provided.

For example, as shown in FIG. 8A, in the case of the bearing 320 having a gap G2 between the upper surface portion 325 and the inner ring 322, the upper plate portion 326 may be provided such that the inner peripheral portion is connected to the inner ring 322 and extends toward the outer ring 321. In this case, the upper plate portion 326 may form a gap G3 near the outer ring 321 far from the gap G2.

For example, as shown in FIG. 8B, in the case of the bearing 320 having the gap G2 between the upper surface portion 325 and the outer ring 321, the upper plate portion 326 may be provided such that the outer peripheral portion is connected to the outer ring 321 and extends toward the inner ring 322. In this case, the upper plate portion 326 may form the gap G3 near the inner ring 322 far from the gap G2.

Accordingly, the upper surface portion 325 and the upper plate portion 326 of the bearing 320 form a labyrinth structure. Therefore, the grease or the like discharged from the gap G2 of the upper surface portion 325 of the bearing 320 is blocked by the upper plate portion 326, and is less likely to come out of the labyrinth structure. As a result, it is possible to prevent the grease or the like from adhering to the optical member.

The labyrinth structure shown in FIG. 8A or 8B is an example, and any structure may be used as long as the position of the gap G2 formed by the upper surface portion 325 and the position of the gap G3 formed by the upper plate portion 326 do not overlap when viewed from above. The labyrinth structure shown in FIG. 8A or 8B is a two-layer structure of the upper surface portion 325 and the upper plate portion 326. Alternatively, the labyrinth structure may be a three-layer structure. The upper surface portion 325 may have a separate structure or an integral structure with the outer ring 321 or the inner ring 322.

### <Countermeasure 4>

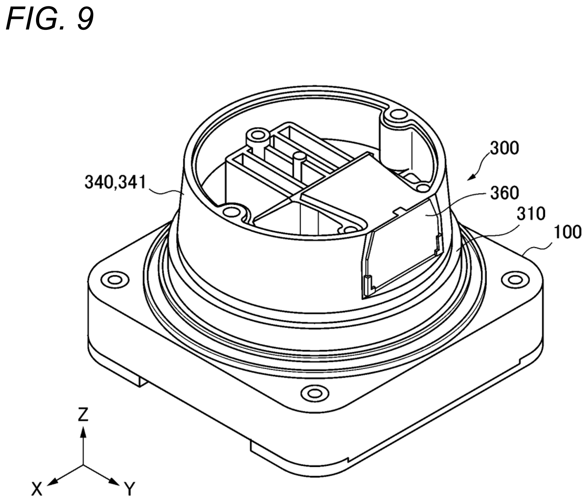

FIG. 9 is a perspective view showing a configuration of the distance measurement device 1 with the outer cover portion 10 and a top surface lid 342 removed according to Embodiment 1.

As shown in FIGS. 1B and 3, the cylinder portion 340 includes a cylinder body 341 and the top surface lid 342 that is a flat plate provided on the upper surface of the cylinder body 341 such that the upper surface is smooth.

As shown in FIG. 9, the inside of the cylinder body 341 has an uneven structure for the purpose of weight reduction, ease of manufacturing, and/or rotational stability. When the top surface lid 342 is not provided and the cylinder body 341 is rotated while the uneven structure is exposed in a state in which the outer cover portion 10 is provided, a turbulent flow is generated in the upper portion of the cylinder body 341 due to the uneven structure inside the outer cover portion 10. The turbulent flow may carry the grease or the like discharged from the gap of the upper surface portion 325 of the bearing 320 and cause the grease or the like to adhere to the optical member.

On the other hand, as shown in the present embodiment, by providing the top surface lid 342 on the upper surface of the cylinder body 341, the turbulent flow due to the rotation of the cylinder portion 340 is not generated. As a result, it is possible to prevent the grease or the like discharged from the gap of the upper surface portion 325 of the bearing 320 from adhering to the optical member and the light transmitting members such as the tube cover 360 and the outer cover portion 10. The outer cover portion 10 protects the cylinder portion 340, for example.

### <Countermeasure 5>

As shown in FIG. 9, the tube cover 360 closes the opening of the tube portion 350 formed on the side surface of the cylinder portion 340. That is, the rotation portion 300 has a substantially cylindrical shape and is partially open, and the tube cover 360 closes the open surface. The tube cover 360 may be read as a lid portion. The substantially cylindrical shape may be any cylindrical shape that does not generate a turbulent flow.

When the cylinder portion 340 is rotated while the opening of the tube portion 350 is exposed without providing the tube cover 360, a turbulent flow is generated due to the air flowing out from the opening of the tube portion 350. The turbulent flow may carry the grease or the like discharged from the gap of the upper surface portion 325 of the bearing 320 and cause the grease or the like to adhere to the optical member and the light transmitting member.

On the other hand, as shown in the present embodiment, by providing the tube cover 360 so as to close the opening of the tube portion 350, the turbulent flow described above due to the rotation of the cylinder portion 340 is not generated. As a result, the grease or the like discharged from the upper surface portion 325 of the bearing 320 can be prevented from adhering to the optical member and the light transmitting member.

### <Countermeasure 6>

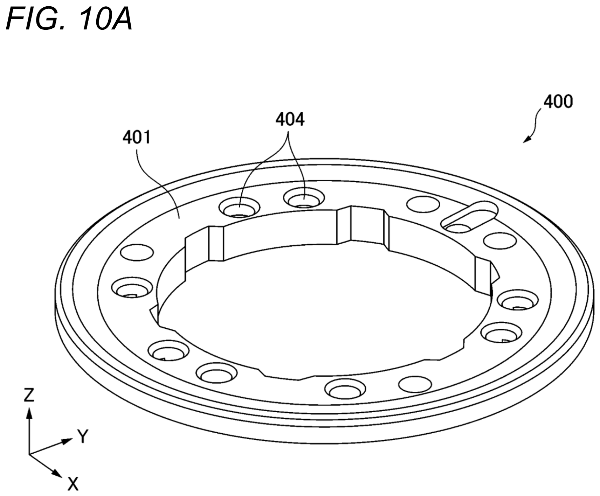

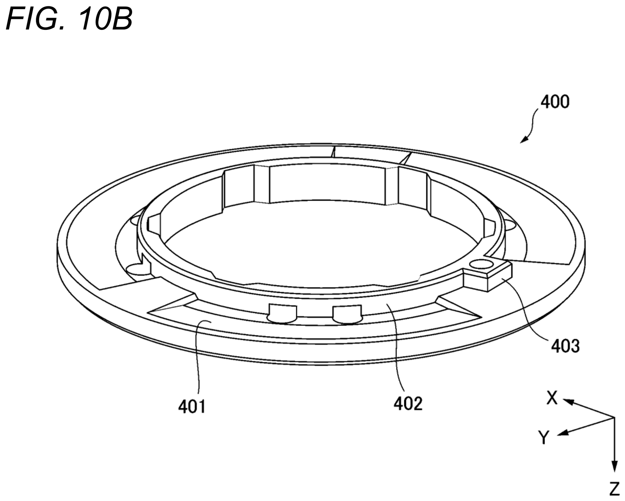

FIG. 10A is a view of the lens cover 400 according to Embodiment 1 as viewed obliquely from above. FIG. 10B is a view of the lens cover 400 according to Embodiment 1 as viewed obliquely from below.

The lens cover 400 has an annular shape whose center is opened in a circular shape. The lens cover 400 includes an annular portion 401 constituting a portion having an annular shape, and a circular convex portion 402 protruding downward from the circumference of the inner opening of the annular portion 401.

The annular portion 401 of the lens cover 400 is supported on the support portion 147 of the fixed support base 140. The circular convex portion 402 of the lens cover 400 is fitted inside the circumference formed by the locking portion 144 and the support portion 147 of the fixed support base 140, and faces the outer peripheral portion of the detection lens 190 provided in the inverted conical portion 141 of the fixed support base 140. Accordingly, the lens cover 400 can be assembled to the fixed support base 140.

A protruding portion 403 is provided in a part of the circular convex portion 402 of the lens cover 400, and the protruding portion 403 is fitted into one predetermined gap formed by the two support portions 147 of the fixed support base 140. Accordingly, the rotation of the lens cover 400 on the XY plane is restricted.

A reservoir hole 404 is formed in the annular portion 401 of the lens cover 400 at a position corresponding to the support portion 147 of the fixed support base 140. The annular portion 401 of the lens cover 400 is fixed to the support portion 147 of the fixed support base 140 by injecting an adhesive into the reservoir hole 404.

When the lens cover 400 is fixed to the fixed support base 140, at least a part of the annular portion 401 of the lens cover 400 is provided above the upper plate portion 326 of the bearing 320 and forms the narrow gap G1 between the sheet 380 and the lower surface of the oil adsorption filter 390. That is, the bearing 320, the lens cover 400, the sheet 380, and the oil adsorption filter 390 form a labyrinth structure. Accordingly, the airflow including the grease or the like flowing from the opening of the second hole 145 through the upper surface portion 325 of the bearing 320 in the outer peripheral direction is blocked by the annular portion 401 of the lens cover 400, and is less likely to move toward the gap G1 and the optical member. Further, the airflow flowing toward the gap G1 is prevented from moving toward the rotation portion 300 by the sheet 380, and at least a part of the grease or the like contained in the airflow is adsorbed by the oil adsorption filter 390. As a result, the grease or the like discharged from the upper surface portion 325 of the bearing 320 can be prevented from adhering to the optical member and the light transmitting member.

### <Countermeasure 7>

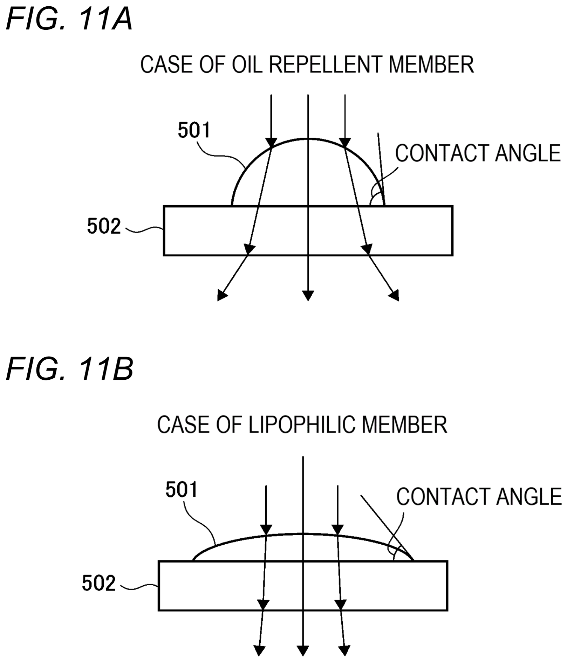

FIG. 11A and 11B are diagrams showing refraction of light when grease adheres to an oil repellent member and is a diagram showing refraction of light when grease adheres to a lipophilic member. Here, FIG. 11 A is a diagram showing refraction of light when grease adheres to an oil repellent member, and FIG. 11B is a diagram showing refraction of light when grease adheres to a lipophilic member.

As shown in FIG. 11A, when the grease adheres to the oil repellent member, the contact angle of the grease becomes relatively large, the grease functions as a lens having a relatively large thickness, and scattering of light becomes relatively large. On the other hand, as shown in FIG. 11B, when the grease adheres to the lipophilic member, the contact angle of the grease becomes smaller than the contact angle of the grease adhering to the oil repellent member, the grease functions as a lens having a relatively small thickness, and scattering of light becomes relatively small.

Therefore, in the present embodiment, by increasing the lipophilicity of the optical member and/or the light transmitting member, even when the grease or the like discharged from the bearing 320 adheres to the optical member and/or the light transmitting member, scattering of light due to the adhesion of the grease or the like is reduced. Accordingly, a decrease in the amount of received light by the photodetector 170 (that is, a decrease in the detection level of the light reception signal) is prevented.

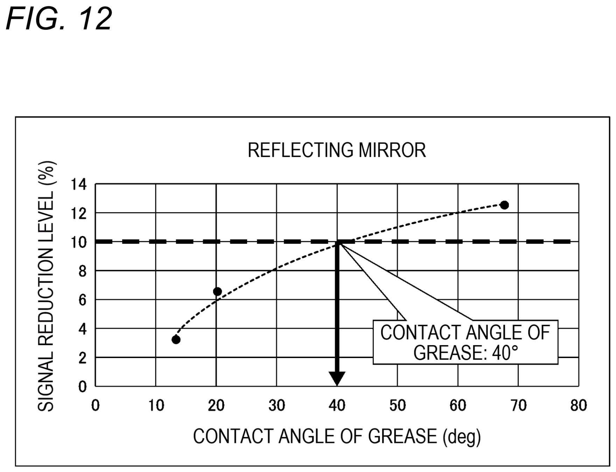

FIG. 12 is a graph showing a relationship between a contact angle of grease on the reflecting mirror 370 and a signal reduction level according to Embodiment 1. In the graph shown in FIG. 12, the horizontal axis represents the contact angle (degree: deg) of the grease adhering to the reflecting mirror 370, and the vertical axis represents the signal reduction level (%). The signal reduction level indicates a rate of decrease in the level of the light reception signal with respect to that when no grease adheres.

For example, it can be seen based on the graph shown in FIG. 12 that the contact angle of the grease adhering to the reflecting mirror 370 is required to be 40 degrees or less when the signal reduction level "10% or less" is set as a target. Therefore, when the signal reduction level "10% or less" is set as a target, the reflecting mirror 370 may have lipophilicity such that the contact angle of the grease adhering to the reflecting mirror 370 is 40 degrees or less. For example, the reflecting mirror 370 may be subjected to lipophilic coating such that the contact angle of the grease adhering to the reflecting mirror 370 is 40 degrees or less.

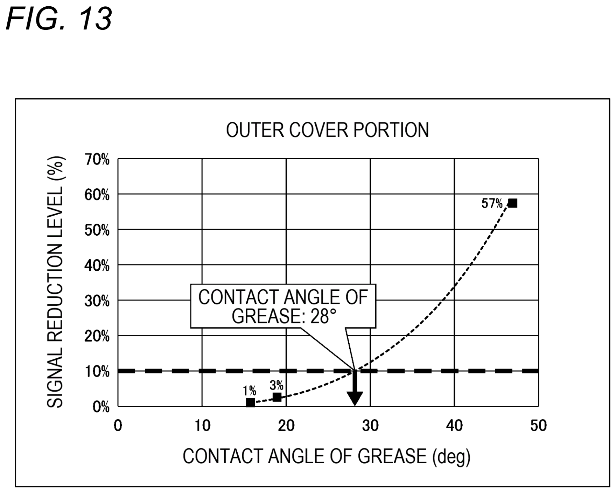

FIG. 13 is a graph showing a relationship between a contact angle of grease in the outer cover portion 10 and a signal reduction level according to Embodiment 1. In the graph shown in FIG. 13, the horizontal axis represents the contact angle (degree: deg) of the grease adhering to the outer cover portion 10, and the vertical axis represents the signal reduction level (%).

For example, it can be seen based on the graph shown in FIG. 13 that the contact angle of the grease adhering to the outer cover portion 10 is required to be 28 degrees or less when the signal reduction level "10% or less" is set as a target. Therefore, when the signal reduction level "10% or less" is set as a target, the outer cover portion 10 may have lipophilicity such that the contact angle of the grease adhering to the outer cover portion 10 is 28 degrees or less. For example, the outer cover portion 10 may be subjected to lipophilic coating such that the contact angle of the grease adhering to the outer cover portion 10 is 28 degrees or less.

As shown in FIGS. 12 and 13, the outer cover portion 10 and the reflecting mirror 370 may each have lipophilicity (for example, lipophilic coating may be applied) such that the contact angle of the grease adhering to the outer cover portion 10 is smaller than the contact angle of the grease adhering to the reflecting mirror 370. This is because the distance between the outer cover portion 10 and the detection lens 190 is larger than the distance between the reflecting mirror 370 and the detection lens 190, and thus the influence (that is, the loss of the amount of received light) of scattering of light due to the grease is large.

The content relating to the lipophilicity of the outer cover portion 10 described above is also applicable to other optical members and/or light transmitting members such as the tube cover 360, the bandpass filter 180, and the detection lens 190.

### (Summary of Embodiment 1)

The following techniques are disclosed based on the above description of Embodiment 1.

### (Technique A)

### <Technique A1>

A distance measurement device (1) for measuring a distance to an object using projection light and reflected light obtained by reflecting the projection light on the object includes a fixed portion (100), a rotation portion (300) configured to rotate with respect to the fixed portion, and a bearing (320) connected to the rotation portion, and the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique A2>

In the distance measurement device according to technique A1, the rotation fin has a plurality of first holes (314) so as to surround the bearing.

Accordingly, the rotation fin can generate an airflow passing through the first hole.

### <Technique A3>

In the distance measurement device according to technique A2, when the rotation fin rotates together with the rotation portion, an airflow connecting a first surface of the bearing close to the rotation portion and the first hole is generated.

Accordingly, since the grease or the like discharged from the first surface of the bearing is carried by the airflow generated by the rotation fin, the grease or the like can be prevented from adhering to the inside.

### <Technique A4>

In the distance measurement device according to technique A2 or A3, the rotation fin includes a second surface extending from the first hole in an outer peripheral direction, and a plurality of fins (315) provided on a surface of the second surface on a side close to the fixed portion.

Accordingly, the rotation fin can generate an airflow by the plurality of fins.

### <Technique A5>

In the distance measurement device according to technique A4, the second surface of the rotation fin is inclined in a direction approaching the fixed portion from a middle toward an outer periphery.

Accordingly, the generated airflow can be moved downward by the inclined surface.

### <Technique A6>

In the distance measurement device according to technique A5, the rotation fin further includes a third surface extending from an outer periphery of the second surface in a direction approaching the fixed portion, the rotation portion further includes a magnet (330) provided inside the third surface of the rotation fin, and the fixed portion further includes a coil (160) and a yoke (150) that are provided adjacent to the magnet.

Accordingly, the airflow moved downward by the inclined surface can cool the magnet and the coil.

### <Technique A7>

In the distance measurement device according to any one of techniques A1 to A6, the fixed portion includes a light source (200) configured to project the projection light in a direction of the rotation portion along a rotation axis of the rotation portion and a detection lens (190) through which the reflected light passes, and the rotation portion further includes a reflecting mirror (370) configured to reflect the projection light from the light source in a predetermined direction and reflect the reflected light in a direction of the detection lens.

Accordingly, the optical paths of the projection light and the reflected light can be controlled.

### <Technique A8>

In the distance measurement device according to any one of techniques A1 to A7, the fixed portion includes a fixed support base (140) configured to support the bearing and having a second hole (145) in a part thereof.

Accordingly, an airflow connecting the first hole (314) and the second hole (145) can be generated.

### <Technique A9>

In the distance measurement device according to any one of techniques A1 to A8, the rotation portion has a substantially cylindrical shape that rotates with respect to the fixed portion, is partially open, and includes a lid portion (for example, a tube cover 360) configured to close an open surface of the rotation portion.

Accordingly, it is possible to prevent generation of a turbulent flow due to rotation of the rotation portion, and thus it is possible to prevent the grease or the like discharged from the bearing from adhering to the inside.

### <Technique A10>

In the distance measurement device according to any one of techniques A1 to A7, a first surface of the bearing close to the rotation portion has a labyrinth structure.

Accordingly, the grease or the like from the bearing can be prevented from being discharged.

### (Technique B)

### <Technique B1>

A distance measurement device (1) for measuring a distance to an object using projection light and reflected light obtained by reflecting the projection light on the object includes a fixed portion (100), a rotation portion (300) configured to rotate with respect to the fixed portion, and a bearing (320) connected to the rotation portion, and the fixed portion includes a fixed support base (140) configured to support the bearing and having a second hole (145) in a part thereof.

Accordingly, the airflow generated by the rotation of the rotation portion can pass through the second hole, and since the grease or the like discharged from the bearing is carried by the airflow, the grease or the like can be prevented from adhering to the inside.

### <Technique B2>

In the distance measurement device according to technique B1, the fixed support base has the second hole (145) in a gap between the fixed support base and the inner ring of the bearing.

Accordingly, since the airflow passes through the vicinity of the bearing, it is possible to prevent the grease or the like discharged from the bearing from adhering to the inside.

### <Technique B3>

In the distance measurement device according to technique B2, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique B4>

In the distance measurement device according to technique B3, the rotation fin has a plurality of first holes (314) so as to surround the bearing.

Accordingly, since the grease or the like discharged from the bearing is carried through the first hole (314) and the second hole (145) by the airflow generated by the rotation fin, the grease or the like can be prevented from adhering to the inside.

### <Technique B5>

In the distance measurement device according to technique B4, when the rotation fin rotates together with the rotation portion, an airflow connecting a first surface of the bearing close to the rotation portion, the first hole, and the second hole is generated.

Accordingly, since the grease or the like discharged from the bearing is carried through the first hole and the second hole by the airflow generated by the rotation fin, the grease or the like can be prevented from adhering to the inside.

### <Technique B6>

In the distance measurement device according to technique B5, the rotation fin includes a second surface extending from the second hole in an outer peripheral direction, and a plurality of fins (315) provided on a surface of the second surface on a side close to the fixed portion.

Accordingly, the rotation fin can generate an airflow by the plurality of fins.

### <Technique B7>

In the distance measurement device according to technique B6, the second surface of the rotation fin is inclined in a direction approaching the fixed portion from a middle toward an outer periphery.

Accordingly, the generated airflow can be moved downward by the inclined surface.

### <Technique B8>

In the distance measurement device according to technique B7, the rotation fin further includes a third surface extending from an outer periphery of the second surface in a direction approaching the fixed portion, the rotation portion further includes a magnet (330) provided inside the third surface of the rotation fin, the fixed portion further includes a coil (160) and a yoke (150) that are provided adjacent to the magnet, and the fixed support base has a third hole (146) at a position overlapping the coil and the yoke when viewed in a direction of a rotation axis of the rotation portion.

Accordingly, the airflow moved downward by the inclined surface can cool the magnet and the coil.

### <Technique B9>

In the distance measurement device according to any one of techniques B1 to B8, the fixed portion includes a light source (200) configured to project the projection light in a direction of the rotation portion along a rotation axis of the rotation portion and a detection lens (190) through which the reflected light passes, and the rotation portion further includes a reflecting mirror (370) configured to reflect the projection light from the light source in a predetermined direction and reflect the reflected light in a direction of the detection lens.

Accordingly, the optical paths of the projection light and the reflected light can be controlled.

### <Technique B10>

In the distance measurement device according to any one of techniques B1 to B9, the rotation portion has a cylindrical shape that rotates with respect to the fixed portion, is partially open, and includes a lid portion (for example, a tube cover 360) configured to close an open surface of the rotation portion.

Accordingly, it is possible to prevent generation of a turbulent flow due to rotation of the rotation portion, and thus it is possible to prevent the grease or the like discharged from the bearing from adhering to the inside.

### <Technique B11>

In the distance measurement device according to any one of techniques B1 to B9, a first surface of the bearing close to the rotation portion has a labyrinth structure.

Accordingly, the grease or the like from the bearing can be prevented from being discharged.

### (Technique C)

### <Technique C1>

A distance measurement device (1) for measuring a distance to an object using projection light and reflected light obtained by reflecting the projection light on the object includes a fixed portion (100), a rotation portion (300) that has a substantially cylindrical shape rotating with respect to the fixed portion and that is partially open, a lid portion (for example, a tube cover 360) configured to close an open surface of the rotation portion, and a bearing (320) connected to the rotation portion.

Accordingly, since the generation of a turbulent flow due to the rotation of the rotation portion is prevented, it is possible to prevent the grease or the like discharged from the bearing from adhering to the inside.

### <Technique C2>

In the distance measurement device according to technique C1, the lid portion is implemented using a member that transmits projection light and/or reflected light.

Accordingly, the projection light and/or the reflected light can be transmitted through the lid portion.

### <Technique C3>

In the distance measurement device according to technique C1 or C2, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique C4>

In the distance measurement device according to any one of techniques C1 to C3, the fixed portion includes a light source (200) configured to project the projection light in a direction of the rotation portion along a rotation axis of the rotation portion and a detection lens (190) through which the reflected light passes, and the rotation portion further includes a reflecting mirror (370) configured to reflect the projection light from the light source in a predetermined direction and reflect the reflected light in a direction of the detection lens.

Accordingly, the optical paths of the projection light and the reflected light can be controlled.

### <Technique C5>

In the distance measurement device according to any one of techniques C1 to C4, the fixed portion includes a fixed support base (140) configured to support the bearing and having a second hole (145) in a part thereof.

Accordingly, the airflow passes through the second hole (145), and the grease or the like discharged from the bearing can be prevented from adhering to the inside.

### <Technique C6>

In the distance measurement device according to any one of techniques C1 to C4, a first surface of the bearing close to the rotation portion has a labyrinth structure.

Accordingly, the grease or the like from the bearing can be prevented from being discharged.

### (Technique D)

### <Technique D1>

A distance measurement device (1) for measuring a distance to an object using projection light and reflected light obtained by reflecting the projection light on the object includes a fixed portion (100), a rotation portion (300) configured to rotate with respect to the fixed portion, and a bearing (320) that includes an outer ring and an inner ring and that is connected to the rotation portion, and a first surface of the bearing has a labyrinth structure.

Accordingly, the grease or the like from the bearing can be prevented from being discharged.

### <Technique D2>

In the distance measurement device according to technique D1, the labyrinth structure includes at least one circular plate of a first annular ring (for example, an upper plate portion 326 in FIG. 8A) that forms a gap with the inner ring (322) and a second annular ring (for example, an upper plate portion 326 in FIG. 8B) that forms a gap with the outer ring (321).

Accordingly, the grease or the like from the bearing can be prevented from being discharged.

### <Technique D3>

In the distance measurement device according to technique D1 or D2, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique D4>

In the distance measurement device according to technique D3, the rotation fin has a plurality of first holes (314) so as to surround the outer ring.

Accordingly, an airflow passing through the first hole can be generated by the rotation of the rotation fin.

### <Technique D5>

In the distance measurement device according to technique D4, when the rotation fin rotates together with the rotation portion, an airflow connecting a first surface of the bearing close to the rotation portion and the first hole (314) is generated.

Accordingly, since the grease or the like discharged from the vicinity of the first surface of the bearing is carried by the airflow generated by the rotation fin, the grease or the like can be prevented from adhering to the inside.

### <Technique D6>

In the distance measurement device according to any one of techniques D3 to D5, the rotation fin includes a second surface extending from the first hole in an outer peripheral direction, and a plurality of fins (315) provided on a surface of the second surface on a side close to the fixed portion.

Accordingly, the rotation fin can generate an airflow by the plurality of fins.

### <Technique D7>

In the distance measurement device according to any one of techniques D1 to D6, the fixed portion includes a light source (200) configured to project the projection light in a direction of the rotation portion along a rotation axis of the rotation portion and a detection lens (190) through which the reflected light passes, and the rotation portion further includes a reflecting mirror (370) configured to reflect the projection light from the light source in a predetermined direction and reflect the reflected light in a direction of the detection lens.

Accordingly, the optical paths of the projection light and the reflected light can be controlled.

### <Technique D8>

In the distance measurement device according to any one of techniques D1 to D7, the fixed portion includes a fixed support base (140) configured to support the bearing and having a second hole (145) in a part thereof.

Accordingly, the airflow passes through the second hole, and the grease or the like discharged from the bearing can be prevented from adhering to the inside.

### <Technique D9>

In the distance measurement device according to any one of techniques D1 to D7, the rotation portion has a substantially cylindrical shape that rotates with respect to the fixed portion, is partially open, and includes a lid portion (for example, a tube cover 360) configured to close an open surface of the rotation portion.

Accordingly, since the generation of a turbulent flow due to the rotation of the rotation portion is prevented, it is possible to prevent the grease or the like discharged from the bearing from adhering to the inside.

### (Technique E)

### <Technique E1>

A distance measurement device (1) for measuring a distance to an object using projection light and reflected light obtained by reflecting the projection light on the object includes a fixed portion (100), a rotation portion (300) configured to rotate with respect to the fixed portion, an outer cover portion (10) configured to cover the rotation portion, and a bearing (320) connected to the rotation portion, and the rotation portion includes a top surface lid (342) on a top surface of the rotation portion.

By providing the top surface lid in this way, it is possible to prevent the occurrence of a turbulent flow due to the rotation of the rotation portion inside the outer cover portion. Accordingly, it is possible to prevent the grease or the like discharged from the bearing from adhering to the inside due to the turbulent flow.

### <Technique E2>

In the distance measurement device according to technique E1, the rotation portion has a substantially cylindrical shape that rotates with respect to the fixed portion, and an inside of the rotation portion has an uneven structure.

Even if the inside has the uneven structure in this way, since the inside is closed by the top surface lid, it is possible to prevent the occurrence of turbulent flow due to the rotation of the rotation portion inside the outer cover portion. Accordingly, it is possible to prevent the grease or the like discharged from the bearing from adhering to the inside due to the turbulent flow.

### <Technique E3>

In the distance measurement device according to technique E1 or E2, the rotation portion includes a rotation fin (310) configured to rotate together with the rotation portion and generate an airflow.

An airflow can be generated by the rotation of the rotation fin.

### <Technique E4>

In the distance measurement device according to any one of techniques E1 to E3, the rotation portion is partially open, and includes a lid portion (for example, a tube cover 360) configured to close an open surface of the rotation portion.

Accordingly, it is possible to prevent generation of a turbulent flow due to rotation of the rotation portion, and thus it is possible to prevent the grease or the like discharged from the bearing from adhering to the inside.

### <Technique E5>

In the distance measurement device according to any one of techniques E1 to E4, the fixed portion includes a fixed support base (140) configured to support the bearing and having a second hole (145) in a part thereof.

Accordingly, since the airflow passes through the vicinity of the bearing, it is possible to prevent the grease or the like discharged from the bearing from adhering to the inside.

### <Technique E6>

In the distance measurement device according to any one of techniques E1 to E5, a first surface of the bearing close to the rotation portion has a labyrinth structure.

Accordingly, the grease or the like from the bearing can be prevented from being discharged.

### <Technique E7>

In the distance measurement device according to any one of techniques E1 to E6, the fixed portion includes a lens cover (400) at least a part of which is provided between the bearing and the rotation portion.

Accordingly, the grease or the like discharged from the bearing is prevented from flowing toward the rotation portion by the lens cover.

### <Technique E8>

The distance measurement device according to technique E7 further includes a sheet (380) provided between the lens cover and the rotation portion.

Accordingly, the grease or the like discharged from the bearing is prevented from flowing toward the rotation portion by the sheet.

### <Technique E9>

The distance measurement device according to technique E7 further includes an adsorption filter (for example, an oil adsorption filter 390) provided between the lens cover and the rotation portion and configured to adsorb oil.

Accordingly, a part of the grease or the like discharged from the bearing is adsorbed by the adsorption filter and is prevented from flowing toward the rotation portion.

### <Technique E10>

In the distance measurement device according to any one of techniques E1 to E9, the fixed portion includes a light source (200) configured to project the projection light in a direction of the rotation portion along a rotation axis of the rotation portion and a detection lens (190) through which the reflected light passes, and the rotation portion includes a reflecting mirror (370) configured to reflect the projection light from the light source in a predetermined direction and reflect the reflected light in a direction of the detection lens.

Accordingly, the optical paths of the projection light and the reflected light can be controlled.

### (Technique F)

### <Technique F1>

A distance measurement device (1) for measuring a distance to an object using projection light and reflected light obtained by reflecting the projection light on the object includes a fixed portion (100), a rotation portion (300) configured to rotate with respect to the fixed portion, and a bearing (320) connected to the rotation portion, and the fixed portion includes a lens cover (400) at least a part of which is provided between the bearing and the rotation portion.

Accordingly, the grease or the like discharged from the bearing is prevented from flowing toward the rotation portion by the lens cover. Therefore, it is possible to prevent the grease or the like discharged from the bearing from adhering to the member of the rotation portion.

### <Technique F2>

In the distance measurement device according to technique F1, the lens cover includes an annular portion (401) having an open center and a circular convex portion (402) protruding from a circumference inside the annular portion.

Accordingly, the grease or the like discharged from the bearing is prevented from flowing toward the rotation portion by the annular portion of the lens cover. Therefore, it is possible to prevent the grease or the like discharged from the bearing from adhering to the member of the rotation portion.

### <Technique F3>

The distance measurement device according to technique F1 or F2 further includes a sheet (380) provided between the fixed portion and the rotation portion.

Accordingly, the grease or the like discharged from the bearing is prevented from flowing toward the rotation portion by the sheet.

### <Technique F4>

The distance measurement device according to any one of techniques F1 to F3 further includes an adsorption filter (for example, an oil adsorption filter 390) provided between the fixed portion and the rotation portion and configured to adsorb oil.

Accordingly, a part of the grease or the like discharged from the bearing is adsorbed by the adsorption filter and is prevented from flowing toward the rotation portion.

### <Technique F5>

In the distance measurement device according to any one of techniques F1 to F4, the rotation portion includes a rotation fin configured to rotate together with the rotation portion and generate an airflow.

An airflow can be generated by the rotation of the rotation fin.

### <Technique F6>

In the distance measurement device according to any one of techniques F1 to F5, the fixed portion includes a fixed support base (140) configured to support the bearing and the lens cover and having a second hole (145) in a part thereof.

Accordingly, the airflow passing through the second hole flows toward the bearing along the lens cover, and the grease or the like discharged from the bearing is carried by the airflow. Therefore, the grease or the like can be prevented from adhering to the inside.

### <Technique F7>

The distance measurement device according to any one of techniques F1 to F6 further includes an outer cover portion (10) configured to cover the rotation portion, and the rotation portion includes a top surface lid (342) on a top surface of the rotation portion.

By providing the top surface lid in this way, it is possible to prevent the occurrence of a turbulent flow due to the rotation of the rotation portion inside the outer cover portion. Accordingly, it is possible to prevent the grease or the like discharged from the bearing from adhering to the inside due to the turbulent flow.

### <Technique F8>

In the distance measurement device according to any one of techniques F1 to F8, a first surface of the bearing close to the rotation portion has a labyrinth structure.

Accordingly, the grease or the like from the bearing can be prevented from being discharged.

### <Technique F9>

In the distance measurement device according to any one of techniques F1 to F8, the rotation portion has a substantially cylindrical shape that rotates with respect to the fixed portion, is partially open, and includes a lid portion (for example, a tube cover 360) configured to close an open surface of the rotation portion.

Accordingly, since the generation of a turbulent flow due to the rotation of the rotation portion is prevented, it is possible to prevent the grease or the like discharged from the bearing from adhering to the inside.

### <Technique F10>

In the distance measurement device according to any one of techniques F1 to F9, the fixed portion includes a light source (200) configured to project the projection light in a direction of the rotation portion along a rotation axis of the rotation portion and a detection lens (190) through which the reflected light passes, and the rotation portion includes a reflecting mirror (370) configured to reflect the projection light from the light source in a predetermined direction and reflect the reflected light in a direction of the detection lens.

Accordingly, the optical paths of the projection light and the reflected light can be controlled.

### (Technique G)

### <Technique G1>

A distance measurement device (1) for measuring a distance to an object using projection light and reflected light obtained by reflecting the projection light on the object includes a fixed portion (100), a rotation portion (300) configured to rotate with respect to the fixed portion, a bearing (320) connected to the rotation portion, and a sheet (380) provided between the fixed portion and the rotation portion.

Accordingly, the grease or the like discharged from the bearing is prevented from flowing toward the rotation portion by the sheet. Therefore, it is possible to prevent the grease or the like discharged from the bearing from adhering to the member of the rotation portion.

### <Technique G2>

In the distance measurement device according to technique G1, the sheet is an annular planar sheet whose center is opened in a circular shape, and transmits at least the reflected light.

Accordingly, at least the reflected light is not hindered by the sheet.

### <Technique G3>

In the distance measurement device according to technique G1 or G2, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique G4>

In the distance measurement device according to any one of techniques G1 to G3, the fixed portion includes a fixed support base (140) configured to support the bearing and having a second hole (145) in a part thereof.

Accordingly, the airflow passes through the second hole (145), and the grease or the like discharged from the bearing can be prevented from adhering to the inside.

### <Technique G5>

In the distance measurement device according to any one of techniques G1 to G4, a first surface of the bearing close to the rotation portion has a labyrinth structure.

Accordingly, the grease or the like from the bearing can be prevented from being discharged.

### <Technique G6>

In the distance measurement device according to any one of techniques G1 to G5, the rotation portion has a substantially cylindrical shape that rotates with respect to the fixed portion, is partially open, and includes a lid portion (for example, a tube cover 360) configured to close an open surface of the rotation portion.

Accordingly, since the generation of a turbulent flow due to the rotation of the rotation portion is prevented, it is possible to prevent the grease or the like discharged from the bearing from adhering to the inside.

### <Technique G7>

In the distance measurement device according to any one of techniques G1 to G6, the fixed portion includes a lens cover (400) at least a part of which is provided between the bearing and the rotation portion.

Accordingly, the grease or the like discharged from the bearing is prevented from flowing toward the rotation portion by the lens cover. Therefore, it is possible to prevent the grease or the like discharged from the bearing from adhering to the member of the rotation portion.

### <Technique G8>

The distance measurement device according to any one of techniques G1 to G7 further includes an adsorption filter (for example, an oil adsorption filter 390) provided between the fixed portion and the rotation portion and configured to adsorb oil.

Accordingly, a part of the grease or the like discharged from the bearing is adsorbed by the adsorption filter and is prevented from flowing toward the rotation portion.

### <Technique G9>

The distance measurement device according to any one of techniques G1 to G8 further includes an outer cover portion (10) configured to cover the rotation portion, and the rotation portion includes a top surface lid (342) on a top surface of the rotation portion.

By providing the top surface lid in this way, it is possible to prevent the occurrence of a turbulent flow due to the rotation of the rotation portion inside the outer cover portion. Accordingly, it is possible to prevent the grease or the like discharged from the bearing from adhering to the inside due to the turbulent flow.

### <Technique G10>

In the distance measurement device according to any one of techniques G1 to G9, the fixed portion includes a light source (200) configured to project the projection light in a direction of the rotation portion along a rotation axis of the rotation portion and a detection lens (190) through which the reflected light passes, and the rotation portion includes a reflecting mirror (370) configured to reflect the projection light from the light source in a predetermined direction and reflect the reflected light in a direction of the detection lens.

Accordingly, the optical paths of the projection light and the reflected light can be controlled.

### (Technique H)

### <Technique H1>

A distance measurement device (1) for measuring a distance to an object using projection light and reflected light obtained by reflecting the projection light on the object includes a fixed portion (100), a rotation portion (300) configured to rotate with respect to the fixed portion, a bearing (320) connected to the rotation portion, and an adsorption filter (for example, an oil adsorption filter 390) provided between the fixed portion and the rotation portion and configured to adsorb oil.

Accordingly, a part of the grease or the like discharged from the bearing is adsorbed by the adsorption filter and can be prevented from flowing toward the rotation portion.

### <Technique H2>

In the distance measurement device according to technique H1, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique H3>

In the distance measurement device according to technique H1 or H2, the fixed portion includes a fixed support base configured to support the bearing and having a second hole (145) in a part thereof.

Accordingly, the airflow passes through the second hole (145), and the grease or the like discharged from the bearing can be prevented from adhering to the inside.

### <Technique H4>

In the distance measurement device according to any one of techniques H1 to H3, a first surface of the bearing close to the rotation portion has a labyrinth structure.

Accordingly, the grease or the like from the bearing can be prevented from being discharged.

### <Technique H5>

In the distance measurement device according to any one of techniques H1 to H4, the rotation portion has a substantially cylindrical shape that rotates with respect to the fixed portion, is partially open, and includes a lid portion (for example, a tube cover 360) configured to close an open surface of the rotation portion.

Accordingly, since the generation of a turbulent flow due to the rotation of the rotation portion is prevented, it is possible to prevent the grease or the like discharged from the bearing from adhering to the inside.

### <Technique H6>

In the distance measurement device according to any one of techniques H1 to H5, the fixed portion includes a lens cover (400) at least a part of which is provided between the bearing and the rotation portion.

Accordingly, the grease or the like discharged from the bearing is prevented from flowing toward the rotation portion by the lens cover. Therefore, it is possible to prevent the grease or the like discharged from the bearing from adhering to the member of the rotation portion.

### <Technique H7>

The distance measurement device according to any one of techniques H1 to H6 further includes an outer cover portion (10) configured to cover the rotation portion, and the rotation portion includes a top surface lid (342) on a top surface of the rotation portion.

By providing the top surface lid in this way, it is possible to prevent the occurrence of a turbulent flow due to the rotation of the rotation portion inside the outer cover portion. Accordingly, it is possible to prevent the grease or the like discharged from the bearing from adhering to the inside due to the turbulent flow.

### <Technique H8>

The distance measurement device according to any one of techniques H1 to H7 further includes a sheet (380) provided between the fixed portion and the rotation portion.

Accordingly, the grease or the like discharged from the bearing is prevented from flowing toward the rotation portion by the sheet. Therefore, it is possible to prevent the grease or the like discharged from the bearing from adhering to the member of the rotation portion.

### <Technique H9>

In the distance measurement device according to any one of techniques H1 to H8, the fixed portion includes a light source (200) configured to project the projection light in a direction of the rotation portion along a rotation axis of the rotation portion and a detection lens (190) through which the reflected light passes, and the rotation portion includes a reflecting mirror (370) configured to reflect the projection light from the light source in a predetermined direction and reflect the reflected light in a direction of the detection lens.

Accordingly, the optical paths of the projection light and the reflected light can be controlled.

### (Technique I)

### <Technique I1>

A distance measurement device (1) for measuring a distance to an object using projection light and reflected light obtained by reflecting the projection light on the object includes a fixed portion (100), a rotation portion (300) configured to rotate with respect to the fixed portion, a lipophilic lid portion (for example, a tube cover 360) configured to cover the rotation portion, and a bearing (320) connected to the rotation portion.

Accordingly, even when the lubricant such as grease discharged from the bearing adheres to the lid portion, the contact angle of the adhering lubricant is reduced, and thus scattering of light due to the adhesion of the lubricant can be reduced.

### <Technique I2>

In the distance measurement device according to technique I1, the lid portion is implemented using a member that transmits projection light and/or reflected light.

Accordingly, the projection light and/or the reflected light can be transmitted through the lid portion.

### <Technique I3>

In the distance measurement device according to technique I1 or I2, the fixed portion includes a light source (200) configured to project the projection light in a direction of the rotation portion along a rotation axis of the rotation portion and a detection lens (190) through which the reflected light passes, and the rotation portion includes a reflecting mirror (370) configured to reflect the projection light from the light source in a predetermined direction and reflect the reflected light in a direction of the detection lens.

Accordingly, the optical paths of the projection light and the reflected light can be controlled.

### <Technique I4>

In the distance measurement device according to technique I3, the reflecting mirror has lipophilicity.

Accordingly, even when the lubricant such as grease discharged from the bearing adheres to the reflecting mirror, the contact angle of the adhering lubricant is reduced, and thus scattering of light due to the adhesion of the lubricant can be reduced.

### <Technique I5>

In the distance measurement device according to technique I4, each of the lid portion and the reflecting mirror has lipophilicity such that a contact angle of a lubricant adhering to the lid portion is smaller than a contact angle of a lubricant adhering to the reflecting mirror.

Although the influence of scattering of light due to the lubricant adhering to the lid portion is large, this configuration can reduce the influence of scattering of light by the lubricant adhering to the lid portion.

### <Technique I6>

In the distance measurement device according to any one of techniques I1 to I5, the lid portion has lipophilicity such that a contact angle of a lubricant adhering to the lid portion is 28 degrees or less.

Accordingly, it is possible to sufficiently reduce the influence of scattering of light due to the lubricant adhering to the lid portion.

### <Technique I7>

In the distance measurement device according to any one of techniques I3 to I6, the reflecting mirror has lipophilicity such that a contact angle of a lubricant adhering to the reflecting mirror is 40 degrees or less.

Accordingly, it is possible to sufficiently reduce the influence of scattering of light due to the lubricant adhering to the reflecting mirror.

### <Technique I8>

In the distance measurement device according to any one of techniques I1 to I7, the rotation portion includes a rotation fin (310) configured to rotate together with the rotation portion and generate an airflow.

Accordingly, since the grease or the like discharged from the bearing is carried by the airflow generated by the rotation fin, the grease or the like can be prevented from adhering to the inside.

### <Technique I9>

In the distance measurement device according to any one of techniques I1 to I8, the fixed portion includes a fixed support base (140) configured to support the bearing and having a second hole (145) in a part thereof.

Accordingly, the airflow passes through the second hole (145), and the grease or the like discharged from the bearing can be prevented from adhering to the inside.

### <Technique I10>

In the distance measurement device according to any one of techniques I1 to I9, a first surface of the bearing close to the rotation portion has a labyrinth structure.

Accordingly, the grease or the like from the bearing can be prevented from being discharged.

### <Technique I11>

In the distance measurement device according to any one of techniques I1 to I10, the rotation portion has a substantially cylindrical shape that rotates with respect to the fixed portion, is partially open, and the lid portion is configured to close an open surface of the rotation portion.

Accordingly, since the generation of a turbulent flow due to the rotation of the rotation portion is prevented, it is possible to prevent the grease or the like discharged from the bearing from adhering to the inside.

### <Technique I12>

In the distance measurement device according to any one of techniques I1 to I11, the fixed portion includes a lens cover (400) at least a part of which is provided between the bearing and the rotation portion.

Accordingly, the grease or the like discharged from the bearing is prevented from flowing toward the rotation portion by the lens cover. Therefore, it is possible to prevent the grease or the like discharged from the bearing from adhering to the member of the rotation portion.

### <Technique I13>

The distance measurement device according to any one of techniques I1 to I12 further includes an outer cover portion (10) configured to cover the rotation portion, and the rotation portion includes a top surface lid (342) on a top surface of the rotation portion.

By providing the top surface lid in this way, it is possible to prevent the occurrence of a turbulent flow due to the rotation of the rotation portion inside the outer cover portion. Accordingly, it is possible to prevent the grease or the like discharged from the bearing from adhering to the inside due to the turbulent flow.

### <Technique I14>

The distance measurement device according to any one of techniques I1 to I13 further includes a sheet (380) provided between the fixed portion and the rotation portion.

Accordingly, the grease or the like discharged from the bearing is prevented from flowing toward the rotation portion by the sheet. Therefore, it is possible to prevent the grease or the like discharged from the bearing from adhering to the member of the rotation portion.

### <Technique I15>

The distance measurement device according to any one of techniques I1 to I14 further includes an adsorption filter (for example, an oil adsorption filter 390) provided between the fixed portion and the rotation portion and configured to adsorb oil.

Accordingly, a part of the grease or the like discharged from the bearing is adsorbed by the adsorption filter and is prevented from flowing toward the rotation portion.

Although the embodiment has been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. Components in the embodiment described above may be combined freely in a range without departing from the gist of the invention.

The present application is based on Japanese patent applications (Japanese Patent Application No. 2023-108930, Japanese Patent Application No. 2023-108931, Japanese Patent Application No. 2023-108932, and Japanese Patent Application No. 2023-108933) filed on June 30, 2023 and Japanese patent applications (Japanese Patent Application No. 2023-161648, Japanese Patent Application No. 2023-161649, Japanese Patent Application No. 2023-161651, Japanese Patent Application No. 2023-161652, and Japanese Patent Application No. 2023-161650) filed on September 25, 2023, the contents of which are incorporated herein by reference.

### INDUSTRIAL APPLICABILITY

The technique according to the present disclosure is useful for a distance measurement device including a bearing, a sensing device that performs optical sensing, or the like.

### REFERENCE SIGNS LIST

1 distance measurement device
10 outer cover portion
100 fixed portion
110 housing portion
111 bottom surface portion
112 side surface portion
113 upper surface portion
120 board
130 control unit
140 fixed support base
141 inverted conical portion
142 base annular portion
143 annular recess
144 locking portion
145 second hole
146 third hole
150 yoke
160 coil
170 photodetector
180 bandpass filter
190 detection lens
191 through hole
200 light source
210 collimator lens
300 rotation portion
310 rotation fin
311 inner surface portion
312 upper surface portion
313 outer surface portion
314 first hole
315 fin
316 inclined surface
320 bearing
321 outer ring
322 inner ring
323 rolling element
324 lower surface portion
325 upper surface portion
326 upper plate portion
330 magnet
340 cylinder portion
341 cylinder body
342 top surface lid
350 tube portion
360 tube cover
370 reflecting mirror
380 sheet
390 oil adsorption filter
400 lens cover
401 annular portion
402 circular convex portion
403 protruding portion
404 reservoir hole
C rotation axis
G1, G2, G3 gap

## Claims

1. A distance measurement device for measuring a distance to an object using projection light and reflected light obtained by reflecting the projection light on the object, the distance measurement device comprising:
a fixed portion;
a rotation portion configured to rotate with respect to the fixed portion;
a lipophilic lid portion configured to cover the rotation portion; and
a bearing connected to the rotation portion.

2. A distance measurement device for measuring a distance to an object using projection light and reflected light obtained by reflecting the projection light on the object, the distance measurement device comprising:
a fixed portion;
a rotation portion configured to rotate with respect to the fixed portion; and
a bearing connected to the rotation portion,
wherein the rotation portion includes a rotation fin configured to rotate together with the rotation portion and generate an airflow.

3. A distance measurement device for measuring a distance to an object using projection light and reflected light obtained by reflecting the projection light on the object, the distance measurement device comprising:
a fixed portion;
a rotation portion configured to rotate with respect to the fixed portion; and
a bearing that includes an outer ring and an inner ring and that is connected to the rotation portion,
wherein a first surface of the bearing has a labyrinth structure.

4. The distance measurement device according to claim 1,
wherein the rotation portion includes a rotation fin configured to rotate together with the rotation portion and generate an airflow.

5. The distance measurement device according to claim 1,
wherein the bearing includes an outer ring and an inner ring, and
wherein a first surface of the bearing has a labyrinth structure.

6. The distance measurement device according to claim 2,
wherein the bearing includes an outer ring and an inner ring, and
wherein a first surface of the bearing has a labyrinth structure.

7. The distance measurement device according to claim 2,
wherein the fixed portion includes a fixed support base configured to support the bearing and having a second hole in a part thereof.

8. The distance measurement device according to claim 2 further comprising
a sheet provided between the fixed portion and the rotation portion.

9. The distance measurement device according to claim 2,
wherein the fixed portion includes a lens cover at least a part of which is provided between the bearing and the rotation portion.

10. The distance measurement device according to claim 2 further comprising
an outer cover portion configured to cover the rotation portion,
wherein the rotation portion includes a top surface lid on a top surface of the rotation portion.

11. The distance measurement device according to claim 2,
wherein the rotation portion has a substantially cylindrical shape and is partially open, and
wherein the rotation portion further includes a lid portion configured to close an open surface of the rotation portion.

12. The distance measurement device according to claim 3 further comprising
an adsorption filter provided between the fixed portion and the rotation portion and configured to adsorb oil.
